# EUROPEAN PATENT SPECIFICATION

(11) **EP 1 372 998 B1**
(45) Date of publication and mention of the grant of the patent: **06.10.2004**
(21) Application number: 02722691.9
(22) Date of filing: 29.03.2002
(51) Int. Cl.: B60H 1/24, B60H 1/00

(54) **AERATION SYSTEM FOR WORK AND INDUSTRIAL VEHICLE CABINS**
BELÜFTUNGSANLAGE FÜR ARBEITS- UND INDUSTRIEFAHRZEUGKABINEN
SYSTEME DE VENTILATION POUR CABINE DE VEHICULE DE TRAVAIL OU VEHICULE INDUSTRIEL

(30) Priority: 30.03.2001 IT TO20010307
(43) Date of publication of application: 02.01.2004
(73) Proprietor: C.R.F. Società Consortile per Azioni, 10043 Orbassano (TO) (IT)
(72) Inventor: GARELLA, Massimo, I-10146 Torino (IT); TREGNAGO, Roberto, I-10040 Volvera (IT)
(74) Representative: Buzzi, Franco
(86) International application number: PCT/IT2002/000203
(87) International publication number: WO 2002/083441

(56) References cited:
- DE-A- 4 015 376
- DE-A- 19 747 646
- DE-U- 9 313 053
- FR-A- 1 398 441
- FR-A- 2 775 221
- US-B1- 6 171 184

## Description

### Field of the invention

The present invention pertains, in general, to work and industrial vehicles, such as, earthmovers, excavators and other similar vehicles; tractors, construction machinery, trucks and vans that have cabins, comprising a transparent front surface and transparent side surfaces, which are delimited by respective, substantially horizontal elements, and by respective substantially vertical supports.

The diffusion of airflows inside the cabins of such vehicles is an important function for the climatic comfort of the operator, and to ensure that the operator has maximum visibility through the transparent surfaces of the cabin. An aereation system for work and industrial vehicle cabins is known from DE 19 747646 corresponding to the preamble of Claim 1.

### Summary of the invention

The object of this invention is the implementation of an aeration system, which makes it possible to achieve the above objectives in a highly functional and effective manner.

With a view to achieving this object, the subject of this invention is defined by the features of Claim 1.

Additional features are defined by the subject-matter of the dependent claims.

### Brief description of the drawings

A detailed description of this invention is given below with reference to the attached drawings, which are provided by way of example, without limitation, and in which:
- Figure 1 is a schematic perspective view of the cabin of a work vehicle, such as an excavator, or other similar vehicle;
- Figure 2 is a larger scale, local view, which illustrates the inside of the cabin shown in Figure 1;
- Figure 3 is a larger scale, perspective view of one of the components of the aeration system, which is applied to the cabin shown in Figures 1 and 2;
- Figure 4 is a larger scale, perspective view of another one of the components of the aeration system applied to the cabin shown in Figures 1 and 2;
- Figure 5 is a lengthwise sectional view referred to line V-V in Figure 3;
- Figure 6 is a reduced scale, schematic view referred to arrow VI in figure 4;
- Figure 7 is a transverse sectional view referred to line VII-VII in Figure 6; and
- Figure 8 is a larger scale, local view of the detail indicated by arrow VIII in Figure 2.

### Detailed description of the invention

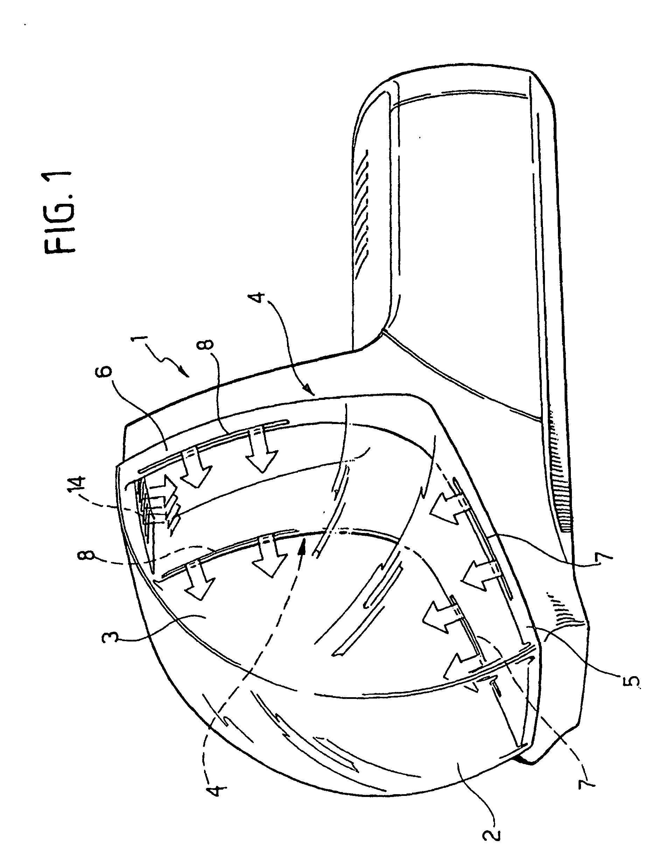

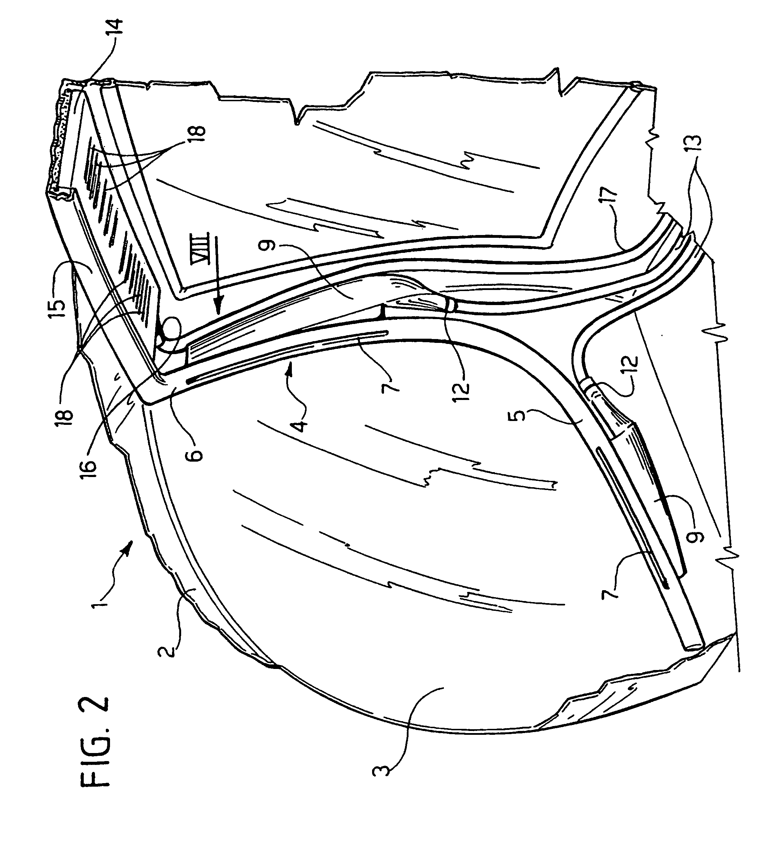

With reference first to Figures 1 and 2, Figure 1 shows an overall schematic view of the cabin of an earthmover, such as an excavator or other similar machinery, whose internal components (driver's seat, control elements, instrumentation, etc.) have been omitted for simplicity of illustration.

Cabin 1 is delimited at the front, sides, and possibly, at the top, by wide transparent surfaces, which consist of a windshield (2) and side windows (3). Naturally, the arrangement, shape and dimensional ratios of these transparent surfaces are merely indicative.

The number 4 indicates the overall view of two substantially L-shaped structural elements, which delimit the side and rear of the transparent surface of the cabin 1. Observed in more detail, each structural element 4 includes a substantially horizontal, lower element 5 and a substantially vertical rear support element 6, composed, in general, of tubular-shaped bodies.

Each lower element 5 has a respective elongated louver 7 running along most of its length; similarly, each rear element 4 also has an elongated louver 8 running along most of its length.

As can be seen more clearly in Figure 2, built into each lower element 5 and into each rear element 6 is a respective diffuser 9, which is connected to an aeration unit, generally of the conventional type, with which the cabin 1 is equipped, in the manner described below.

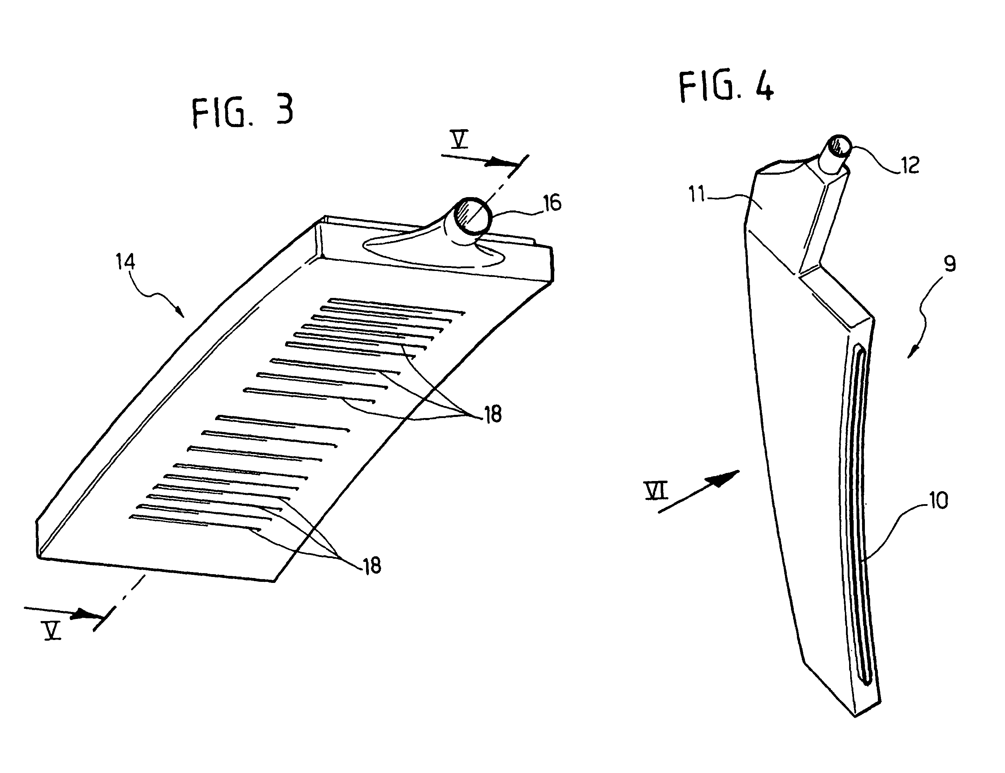

The diffusers 9 are essentially identical to each other (except for size); a detailed illustration of one of these is shown in Figures 4 and 6-8. The diffuser consists of a box-shaped, flat, elongated plastic body, which is usually formed by two, trapezoid-shaped half-shells, coupled to each other, and whose larger sides are arched; along one of these sides is an elongated opening 10, comprising an air nozzle for the outflow of air. The diffuser 9 has a narrower portion 11 at one end that terminates in a tubular coupling 12, which can be connected, by means of a pipe 13 (Figure 2) to the cabin's ventilation unit.

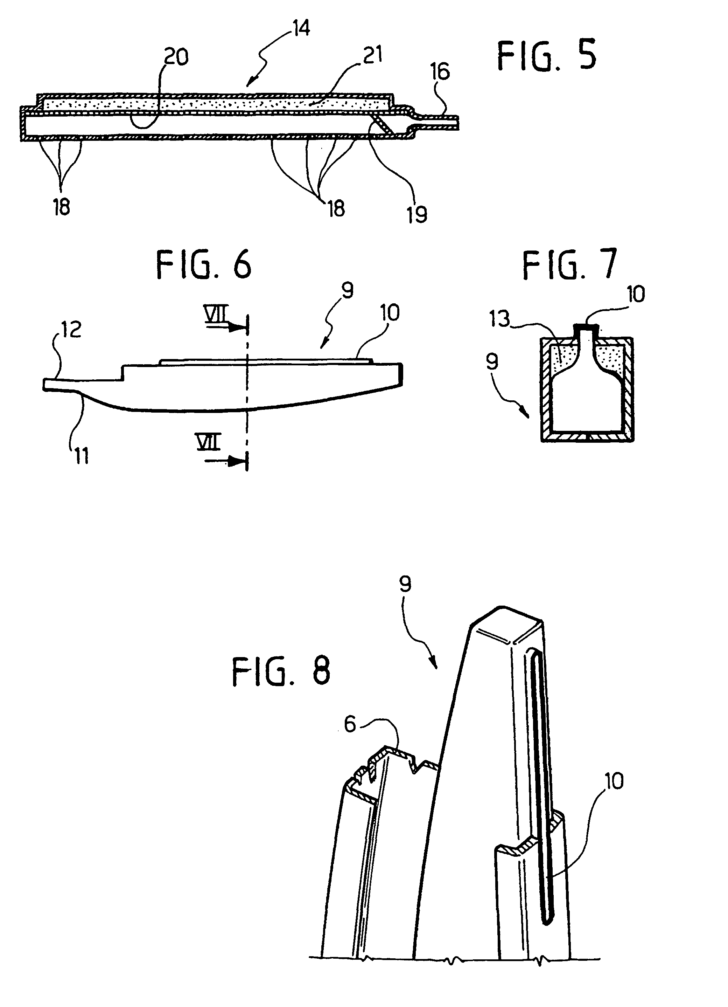

As shown in detail in Figure 7, the elongated air nozzle 10 is raised and it is coupled with the diffuser's 9 cavity through a holder 13, which is made of resin or other similar material and is shaped so as to define a tapered area.

Each diffuser 9 is housed inside its respective element 5 or 6, with the air nozzle for outflow 10 installed and fixed inside its corresponding elongated louver 7, or 8, as is clearly visible in Figure 2.

The diffusers are arranged so that, during operation, ventilation airflow, which passes through the pipes 13 to the diffusers 9, generates, through the outflow air nozzles 10 and the louvers 7, 8, airflows that are essentially blade-like, aimed parallel to the inside surfaces of the side windows 3, as indicated by the arrows in Figure 1. In this way, ventilation is uniformly and effectively diffused and surrounds the operator seated at work inside the cabin 1.

To enhance this effect, the invention also provides for an additional diffuser 14, which is built into the upper rear area of the cabin 1, inside a transverse coupling element 15 of the upper ends 6 of the two structural bodies 4.

As illustrated in detail in Figures 3 and 5, the diffuser 14 also has a flat, box-shaped structure, with a tubular coupling 16 at its end, which can be connected to the ventilation unit through its respective pipe 17 (Figure 2). The wall of the diffuser 14 facing the inside of the cabin is composed of a plurality of parallel louvers 18, which are pointed transversally toward the diffuser 14, thus forming additional nozzles for the outflow of ventilation airflow.

A porous cover, e.g. a perforated fabric, can be conveniently applied to the diffuser 14 to make the air jets coming from the louvers 18, and aimed towards the operator's body, more uniform.

To reduce noise during operation, a perforated slanted diaphragm 19 is inserted inside the cavity of the diffuser 14, just ahead of the tubular coupling 16, for the influx of ventilation airflow. For the same reason, the wall of the diffuser 14 which is opposite the nozzles for the outflow of air 18 also has a perforated plate 20, over which a pad 21 made of sound absorbent material is placed. Similar solutions can also be applied for the diffusers 9 described previously.

The ventilation airflow which is produced, during use, through the nozzles 18 of the diffuser 14, is schematically illustrated by the arrows pointing downwards in Figure 1.

From the above description, it appears evident that during its use the aeration system based on this invention makes it possible to effectively cool/heat the area around the operator, who is seated in the cabin 1, as well as to effectively demist/defrost the transparent surfaces of the same cabin.

Naturally, the construction details and the implementation methods can vary widely with respect to what is described and illustrated in this document, without going beyond the scope of this invention, as defined in the claims that follow. For example, the horizontal elements 5 could be arranged at the top, instead of at the bottom, and the support elements 6 could be positioned at the front, instead of at the rear, with respect to the side windows 3.

## Claims

1. An aeration system for work and industrial vehicle cabins, in particular for excavators and other similar vehicles, having a cabin comprising a transparent front surface (2) and transparent side surfaces (3) which are delimited by respective, substantially horizontal elements (5) and by respective substantially vertical supports (8), comprising two pairs of diffusers (9), which are built respectively into said substantially horizontal elements (5) and into said substantially vertical supports (6), and designed to direct their respective ventilation airflows in the vicinity of said transparent side surfaces (3) of the cabin (1), so as to produce essentially uniform ventilation close to the operator's body, **characterized in that** each one of said diffusers (9) consists of a flat, elongated manifold having an end a tubular coupling (12, 16) for the air inflow and whose cavity tapers towards a respective louver (10) for the air outflow, and a slanted perforated diaphragm (19) associated to said coupling (12).

2. Aeration system according to Claim 1, **characterized in that** said elongated louvers (10) are parallel to said substantially horizontal elements (5) or, respectively, to said substantially vertical supports (6) of the cabin (1).

3. Aeration system according to Claim 1 or 2, **characterized in that** said diffuser (9) is delimited, on the side opposite to said louver (10) for the air outflow (18), by a perforated plate (20) over which a layer of sound absorbent material (21) is placed.

4. Aeration system according to Claim 1, **characterized in that** said louver (10) is formed by a protrusion of said diffuser (9), which is fitted inside a corresponding opening of complementary form (7, 8) of the substantially horizontal element (5) or respectively, of the substantially vertical support(6) of the cabin (1).

5. Aeration system according to Claim 1, wherein a transverse upper element (15) is provided between said substantially vertical supports (6), **characterized in that** it also includes an additional diffuser (14), which is built into said transverse upper element (15) and is designed to direct ventilation airflows downward towards the body of the operator.

6. Aeration system according to Claim 5, **characterized in that** said additional diffuser (14) consists of a flat, elongated manifold having an end tubular coupling (16) for the air inflow of air and is formed at the bottom with a plurality of parallel louvers (18) for the air outflow, said louvers (18) being placed transversally to said diffuser (14).

7. Aeration system according to Claim 6, **characterized in that** said additional diffuser (14) is delimited, on the side opposite to said louvers for the air outflow (18), by a perforated plate (20) over which a layer of sound absorbent material (21) is placed.

8. Aeration system according to Claim 6, **characterized in that** a perforated cover is applied to said louvers for the air outflow (18).

## Patentansprüche

1. Belüftungssystem für Arbeits- und Industrie-Fahrzeugkabinen, im Besonderen für Bagger und andere ähnliche Fahrzeuge, welche eine Kabine aufweisen, die eine transparente Frontoberfläche (2) und transparente Seitenoberflächen (3) hat, welche durch jeweilige im Wesentlichen horizontale Elemente (5) und durch jeweilige vertikale Stützen (8) begrenzt werden, umfassend zwei Paare Diffusoren (9), welche jeweils in die im Wesentlichen horizontalen Elemente (5) eingebaut sind und in die im Wesentlichen vertikalen Stützen (6) und dazu entworfen ihre entsprechenden Belüftungsluftströme in die Nähe der transparenten Seitenoberflächen (3) der Kabine (1) zu richten, um im Wesentlichen eine gleichförmige Belüftung in der Nähe des Körpers des Betätigers zu erzeugen, **dadurch gekennzeichnet, dass** einer der Diffusoren (9) aus einem flachen länglichen Verteiler besteht, welcher eine röhrenförmige Endkupplung (12, 16) für den Lufteinlass aufweist und dessen Vertiefung sich in Richtung einer jeweiligen Lüftungsöffnung (10) für den Luftauslass verjüngt und eine abgeschrägte perforierte Membran (19), welche der Kupplung (12) zugeordnet ist.

2. Belüftungssystem gemäß Anspruch 1, **dadurch gekennzeichnet, dass** die länglichen Lüftungsöffnungen (10) parallel zu den im Wesentlichen horizontalen Elementen (5) oder jeweils zu den im Wesentlichen vertikalen Stützen (6) der Kabine (1) sind.

3. Belüftungssystem gemäß Anspruch 1 oder 2, **dadurch gekennzeichnet, dass** der Diffusor (9) auf einer Seite der Lüftungsöffnung (10) für den Luftauslass (18) durch eine perforierte Platte (20) begrenzt ist, über welcher eine Lage von schallisolierendem Material (21) platziert ist.

4. Belüftungssystem gemäß Anspruch 1, **dadurch gekennzeichnet, dass** die Lüftungsöffnung (10) durch einen Vorsprung des Diffusors (9) gebildet wird, welcher innerhalb einer entsprechenden Öffnung einer komplementären Form (7, 8) des im Wesentlichen horizontalen Elementes (5), oder jeweils der im Wesentlichen vertikalen Stützen (6) der Kabine (1) eingepasst ist.

5. Belüftungssystem gemäß Anspruch 1, wobei ein queres oberes Bauteil (15) zwischen den im Wesentlichen vertikalen Stützen (6) bereitgestellt ist, **dadurch gekennzeichnet, dass** es ebenso einen zusätzlichen Diffusor (14) aufweist, welcher in das quere obere Element (15) eingebaut und dazu entworfen ist, Lüftungsströmungen nach unten in Richtung des Körpers des Betätigers zu richten.

6. Belüftungssystem gemäß Anspruch 5, **dadurch gekennzeichnet, dass** der zusätzliche Diffusor (14) aus einem flachen länglichen Verteiler besteht, der eine röhrenförmige Endkupplung (16) für den Lufteinlass von Luft aufweist und an der Unterseite mit einer Vielzahl von parallelen Lüftungsöffnungen (18) für den Luftauslass ausgestattet ist, wobei die Lüftungsöffnungen (18) quer zu dem Diffusor (14) platziert sind:

7. Belüftungssystem gemäß Anspruch 6, **dadurch gekennzeichnet, dass** der zusätzliche Diffusor (14) auf der gegenüberliegenden Seite der Lüftungsöffnungen für den Luftauslass (18) durch eine perforierte Platte (20) begrenzt ist, über welcher eine Lage von schallabsorbierendem Material (21) platziert ist.

8. Belüftungssystem gemäß Anspruch 6, **dadurch gekennzeichnet, dass** eine perforierte Abdeckung an den Lüftungsöffnungen für den Luftauslass (18) angebracht ist.

## Revendications

1. Système d'aération destiné à des cabines de véhicules utilitaires et industriels, en particulier destiné à des excavatrices et d'autres véhicules analogues, ayant une cabine qui comporte une surface avant transparente (2) et des surfaces latérales transparentes (3) qui sont délimitées par des éléments respectifs pratiquement horizontaux (5) et par des supports respectifs pratiquement verticaux (8), comprenant deux paires de diffuseurs (9) qui sont construits respectivement dans les éléments pratiquement horizontaux (5) et dans les supports pratiquement verticaux (6) et sont destinés à diriger les courants respectifs d'air de ventilation au voisinage des surfaces latérales transparentes (3) de la cabine (1) pour la production d'une ventilation essentiellement uniforme près du corps de l'opérateur, **caractérisé en ce que** chacun des diffuseurs (9) est constitué d'un collecteur plat et allongé ayant à une extrémité un raccord tubulaire (12, 16) pour l'entrée d'air et dont la cavité a une dimension qui diminue progressivement vers une lumière respective (10) du courant d'air de sortie, et un diaphragme perforé incliné (19) associé au raccord (12).

2. Système d'aération selon la revendication 1, **caractérisé en ce que** les lumières allongées (10) sont parallèles aux éléments pratiquement horizontaux (5) ou, respectivement, aux supports pratiquement verticaux (6) de la cabine (1).

3. Système d'aération selon la revendication 1 ou 2, **caractérisé en ce que** le diffuseur (9) est délimité, du côté opposé à la lumière (10) du courant de sortie d'air (18), par une plaque perforée (20) sur laquelle est placée une couche d'un matériau d'absorption acoustique (21).

4. Système d'aération selon la revendication 1, **caractérisé en ce que** la lumière (10) est formée par une saillie du diffuseur (9) qui est montée à l'intérieur d'une ouverture correspondante de forme complémentaire (7, 8) de l'élément pratiquement horizontal (5) ou respectivement du support pratiquement vertical (6) de la cabine (1).

5. Système d'aération selon la revendication 1, dans lequel un élément supérieur transversal (15) est disposé entre les supports pratiquement verticaux (6), **caractérisé en ce qu'**il comprend en outre un diffuseur supplémentaire (14) qui est incorporé à l'élément supérieur transversal (15) et qui est destiné à diriger les courants d'air de ventilation vers le corps de l'opérateur.

6. Système d'aération selon la revendication 5, **caractérisé en ce que** le diffuseur supplémentaire (14) est constitué d'un collecteur plat et allongé ayant un raccord tubulaire d'extrémité (16) pour l'entrée d'air et est formé à sa partie inférieure avec plusieurs lumières parallèles (18) de sortie d'air, les lumières (18) étant disposées transversalement au diffuseur (14).

7. Système d'aération selon la revendication 6, **caractérisé en ce que** le diffuseur supplémentaire (14) est délimité, du côté opposé aux lumières de sortie d'air (18), par une plaque perforée (20) sur laquelle est placée une couche d'un matériau d'absorption acoustique (21).

8. Système d'aération selon la revendication 6, **caractérisé en ce qu'**un couvercle perforé est appliqué aux lumières de sortie d'air (18).
